# EUROPEAN PATENT APPLICATION

(11) **EP 3 240 246 A1**
(43) Date of publication of application: **01.11.2017**
(21) Application number: 15877663.3
(22) Date of filing: 03.12.2015
(51) Int. Cl.: H04L 12/707, H04L 1/22

(54) **POINT TO MULTIPLE POINT SERVICE TRANSMISSION METHOD AND DEVICE**

(30) Priority: 16.01.2015 CN 201510024469
(71) Applicant: Huawei Technologies Co., Ltd., Longgang District Shenzhen, Guangdong 518129 (CN)
(72) Inventor: SUN, Guanghui, Shenzhen Guangdong 518129 (CN); XU, Qianfeng, Shenzhen Guangdong 518129 (CN); XIANG, Yanwen, Shenzhen Guangdong 518129 (CN)
(74) Representative: Pfenning, Meinig & Partner mbB
(86) International application number: PCT/CN2015/096299
(87) International publication number: WO 2016/112752

(57) **Abstract**

Embodiments of the present invention disclose a point-to-multipoint service transmission method and apparatus, which are applied to a network that includes a root node, a first node, a second node, and multiple leaf nodes. The first node is connected to the second node by using a first additional path, and the first additional path and a second path constitute a first protection path that connects the first node to the root node. The second node is connected to the first node by using a second additional path, and the second additional path and a first path constitute a second protection path that connects the second node to the root node. The method may include: when the first node is in an active state and the second node is in a standby state, receiving, by the first node by using the first protection path if the first path is faulty, service data sent by the root node; and forwarding, by the first node, the service data to the multiple leaf nodes. The embodiments of the present invention can improve a protection capability of service transmission in a P2MP service.

## Description

This application claims priority to Chinese Patent Application No. 201510024469.3, filed with the Chinese Patent Office on January 16, 2015 and entitled "POINT-TO-MULTIPOINT SERVICE TRANSMISSION METHOD AND APPARATUS", which is incorporated herein by reference in its entirety.

### TECHNICAL FIELD

The present invention relates to the communications field, and in particular, to a point-to-multipoint service transmission method and apparatus.

### BACKGROUND

A point-to-multipoint (English: Point To Multiple Point, P2MP for short) service is an important service model in the Ethernet. The P2MP service is a unidirectional service, and the service is transmitted from a root node (or a source end) to a leaf node (or a sink end) of a network. In an actual application, there are generally two paths: an active path and a standby path, for the P2MP service. The active path may be understood as a working path, and the standby path may be understood as a protection path. When the active path is not faulty, the active path is used for service transmission. When the active path is faulty, the standby path is used for service transmission. However, in the foregoing technical solution, when both the active path and the standby path are faulty, service data delivered by the root node cannot be transmitted to the leaf node. For example, the active path includes a root node A - a node B - a leaf node D, and the standby path includes the root node A - a node C - the leaf node D. If a path from the node B to the leaf node D is faulty, and a path from the root node A to the node C is also faulty, service data delivered by the root node A cannot be transmitted to the leaf node D. It can be learnt that in the current P2MP service, a protection capability of service transmission is not strong.

### SUMMARY

The present invention provides a point-to-multipoint service transmission method and apparatus, so as to improve a protection capability of service transmission in a P2MP service.

According to a first aspect, the present invention provides a point-to-multipoint service transmission method, applied to a network that includes a root node, a first node, a second node, and multiple leaf nodes, where the first node is connected to the root node by using a first path, the second node is connected to the root node by using a second path, the multiple leaf nodes are dual-homed to the first node and the second node, and the first node and the second node are in an active-standby relationship;
the first node is connected to the second node by using a first additional path, the first additional path and the second path constitute a first protection path that connects the first node to the root node, and the first protection path is used to transmit service data that is sent to the first node by the root node by using the second node;
the second node is connected to the first node by using a second additional path, the second additional path and the first path constitute a second protection path that connects the second node to the root node, and the second protection path is used to transmit service data that is sent to the second node by the root node by using the first node; and
the method includes:
when the first node is in an active state and the second node is in a standby state, receiving, by the first node by using the first protection path if the first path is faulty, service data sent by the root node; and
forwarding, by the first node, the service data to the multiple leaf nodes.

In a first possible implementation manner of the first aspect, when the first node is in the active state and the second node is in the standby state, the method further includes:
receiving, by the first node by using the first path if the first path is not faulty, service data sent by the root node, and forwarding the service data to the multiple leaf nodes.

With reference to the first possible implementation manner of the first aspect, in a second possible implementation manner of the first aspect, the method further includes:
forwarding, by the first node to the second node by using the second additional path, the service data that is sent by the root node and that is received by the first node by using the first path, so that the second node receives, by using the second protection path, the service data sent by the root node.

With reference to the first aspect, the first possible implementation manner of the first aspect, or the second possible implementation manner of the first aspect, in a third possible implementation manner of the first aspect, the method further includes:
when the first node is in a standby state and the second node is in an active state, receiving, by the first node by using the first path if the first path is not faulty, service data sent by the root node, and forwarding the service data to the second node by using the second additional path, so that the second node receives, by using the second protection path, the service data sent by the root node.

According to a second aspect, the present invention provides a point-to-multipoint service transmission apparatus, which is applied to a network that includes a root node, the first node, a second node, and multiple leaf nodes, where the apparatus is deployed on the first node, the first node is connected to the root node by using a first path, the second node is connected to the root node by using a second path, the multiple leaf nodes are dual-homed to the first node and the second node, and the first node and the second node are in an active-standby relationship;
the apparatus is connected to the second node by using a first additional path, the first additional path and the second path constitute a first protection path that connects the first node to the root node, and the first protection path is used to transmit service data that is sent to the first node by the root node by using the second node;
the second node is connected to the apparatus by using a second additional path, the second additional path and the first path constitute a second protection path that connects the second node to the root node, and the second protection path is used to transmit service data that is sent to the second node by the root node by using the first node; and
the apparatus includes a first receiving unit and a first forwarding unit, where
the first receiving unit is configured to: when the first node is in an active state and the second node is in a standby state, receive, by using the first protection path if the first path is faulty, service data sent by the root node; and
the first forwarding unit is configured to forward the service data to the multiple leaf nodes.

In a first possible implementation manner of the second aspect, the apparatus further includes:
a second receiving unit, configured to: when the first node is in the active state and the second node is in the standby state, receive, by using the first path if the first path is not faulty, service data sent by the root node; and
a second forwarding unit, configured to forward the service data received by the second receiving unit to the multiple leaf nodes.

With reference to the first possible implementation manner of the second aspect, in a second possible implementation manner of the second aspect, the apparatus further includes:
a third forwarding unit, configured to forward, to the second node by using the second additional path, the service data received by the second receiving unit, so that the second node receives, by using the second protection path, the service data sent by the root node.

With reference to the second aspect, the first possible implementation manner of the second aspect, or the second possible implementation manner of the second aspect, in a second possible implementation manner of the second aspect, the apparatus further includes:
a third receiving unit, configured to: when the first node is in a standby state and the second node is in an active state, receive, by using the first path if the first path is not faulty, service data sent by the root node; and
a fourth forwarding unit, configured to forward, to the second node by using the second additional path, the service data received by the third receiving unit, so that the second node receives, by using the second protection path, the service data sent by the root node.

In the foregoing technical solutions, a first node is connected to a second node by using a first additional path, the first additional path and a second path constitute a first protection path that connects the first node to a root node, and the first protection path is used to transmit service data that is sent to the first node by the root node by using the second node; the second node is connected to the first node by using a second additional path, the second additional path and a first path constitute a second protection path that connects the second node to the root node, and the second protection path is used to transmit service data that is sent to the second node by the root node by using the first node. When the first node is in an active state and the second node is in a standby state, the first node receives, by using the first protection path if the first path is faulty, service data sent by the root node; and the first node forwards the service data to multiple leaf nodes. In this way, when the first path is faulty, the first node can receive, by using the first protection path, the service data sent by the root node. Therefore, the present invention can improve a protection capability of service transmission in a P2MP service.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show only some embodiments of the present invention, and a person of ordinary skill in the art may still derive other drawings from these accompanying drawings without creative efforts.
FIG. 1 is a schematic diagram of a network architecture of a point-to-multipoint service transmission method according to an embodiment of the present invention;
FIG. 2 is a schematic flowchart of a point-to-multipoint service transmission method according to an embodiment of the present invention;
FIG. 3 is a schematic flowchart of another point-to-multipoint service transmission method according to an embodiment of the present invention;
FIG. 4 is a schematic structural diagram of a point-to-multipoint service transmission apparatus according to an embodiment of the present invention;
FIG. 5 is a schematic structural diagram of another point-to-multipoint service transmission apparatus according to an embodiment of the present invention; and
FIG. 6 is a schematic structural diagram of still another point-to-multipoint service transmission apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are only some but not all of the embodiments of the present invention. All other embodiments obtained by a person of ordinary skill in the art based on the embodiments of the present invention without creative efforts shall fall within the protection scope of the present invention.

To better understand the embodiments of the present invention, the following first describes a network architecture of point-to-multipoint service transmission according to an embodiment of the present invention.

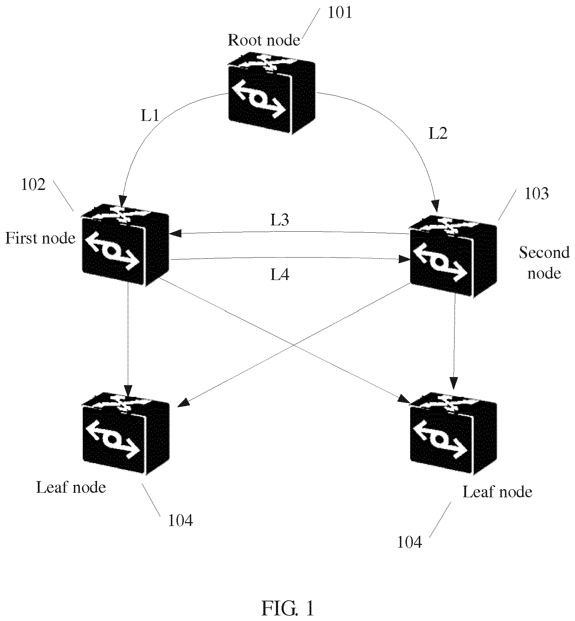

FIG. 1 is a schematic diagram of a network architecture of a point-to-multipoint service transmission method according to an embodiment of the present invention. As shown in FIG. 1, the network architecture includes a root node 101, a first node 102, a second node 103, and multiple leaf nodes 104. The first node 101 is connected to the root node 101 by using a first path L1, the second node 102 is connected to the root node 101 by using a second path L2, the multiple leaf nodes 104 are dual-homed to the first node 102 and the second node 103, and the first node 102 and the second node 103 are in an active-standby relationship. The first path L1 may be a path that directly connects the first node 102 to the root node 101. Alternatively, the first path L1 may be a path that indirectly connects the first node 102 to the root node 101; that is, the path may include one or more intermediate nodes. Similarly, the second path L2 may be a path for a direct connection or an indirect connection. In addition, that the multiple leaf nodes 104 are dual-homed to the first node 102 and the second node 103 may be understood as that the multiple leaf nodes 104 are connected to both the first node 102 and the second node 103. For the first node 102 and the second node 103, one node in an active state is responsible for forwarding, to the multiple leaf nodes 104, service data sent by the root node 101, and the other node in a standby state does not forward, to the multiple leaf nodes 104, the service data sent by the root node 101.

In addition, in this embodiment of the present invention, the first node 102 may be connected to the second node 103 by using a first additional path L3, the first additional path L3 and the second path L2 constitute a first protection path that connects the first node 102 to the root node 101, and the first protection path is used to transmit service data that is sent to the first node 102 by the root node 101 by using the second node 103.

In addition, the second node 103 is connected to the first node 102 by using a second additional path L4, the second additional path L4 and the first path L1 constitute a second protection path that connects the second node 103 to the root node 101, and the second protection path is used to transmit service data that is sent to the second node 103 by the root node 101 by using the first node 102.

In this way, a protection capability of service transmission in a P2MP service can be improved by using the first additional path L3 and the second additional path L4.

In addition, the first additional path L3 and the second additional path L4 may also be paths for a direct connection or an indirect connection.

In addition, in this embodiment of the present invention, the first node 102 and the second node 103 may be any devices (for example, switches and routers) that can support point-to-multipoint service transmission. In addition, a network layer at which the first node 102 and the second node 103 are located is not limited. For example, the first node 102 and the second node 103 may be devices at a core layer, an aggregation layer, or an access layer.

In addition, this embodiment of the present invention may be applied to the Ethernet, a Multiprotocol Label Switching (English: Multi-Protocol Label Switching, MPLS for short) network, or another network in which service data transmission in a device is unidirectional.

The following provides a detailed description about a point-to-multipoint service transmission method in the foregoing network architecture.

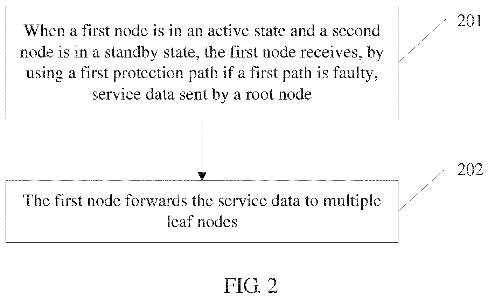

FIG. 2 is a schematic flowchart of a point-to-multipoint service transmission method according to an embodiment of the present invention. As shown in FIG. 2, the method includes the following steps.

201: When a first node is in an active state and a second node is in a standby state, the first node receives, by using a first protection path if a first path is faulty, service data sent by the root node.

It should be noted that the first path and the first protection path in this method may be the first path and the first protection path in the network architecture shown in FIG. 1, and descriptions are not repeated herein.

That the first node is in an active state and the second node is in a standby state may be understood as that multiple leaf nodes currently select the first node for receiving the service data sent by the root node, a path from the first node to the multiple leaf nodes is not faulty currently, and the second node acts as a standby node and does not forward, to the multiple leaf nodes, the service data sent by the root node.

Optionally, when the first path is faulty, the first node cannot receive, by using the first path, the service data sent by the root node.

In addition, that the first node receives, by using a first protection path, service data sent by a root node may be understood as that the first node receives service data that is sent to the first node by the root node by using the second node. That is, the first node receives, by using the first additional path, service data that is sent by the root node and that is received by the second node by using a second path.

202: The first node forwards the service data to multiple leaf nodes.

By means of the foregoing steps, when the first node is in the active state and the second node is in the standby state, the first node can receive, by using the first protection path if the first path is faulty, the service data sent by the root node. In this way, when the first path is faulty, the first node can still receive the service data sent by the root node and forward the service data to the multiple leaf nodes, thereby improving a protection capability of service transmission in a P2MP service.

In this embodiment, the first node is connected to the second node by using a first additional path, the first additional path and a second path constitute a first protection path that connects the first node to the root node, and the first protection path is used to transmit service data that is sent to the first node by the root node by using the second node; the second node is connected to the first node by using a second additional path, the second additional path and a first path constitute a second protection path that connects the second node to the root node, and the second protection path is used to transmit service data that is sent to the second node by the root node by using the first node. When the first node is in an active state and the second node is in a standby state, the first node receives, by using the first protection path if the first path is faulty, service data sent by the root node; and the first node forwards the service data to multiple leaf nodes. In this way, when the first path is faulty, the first node can receive, by using the first protection path, the service data sent by the root node. Therefore, this embodiment can improve a protection capability of service transmission in a P2MP service.

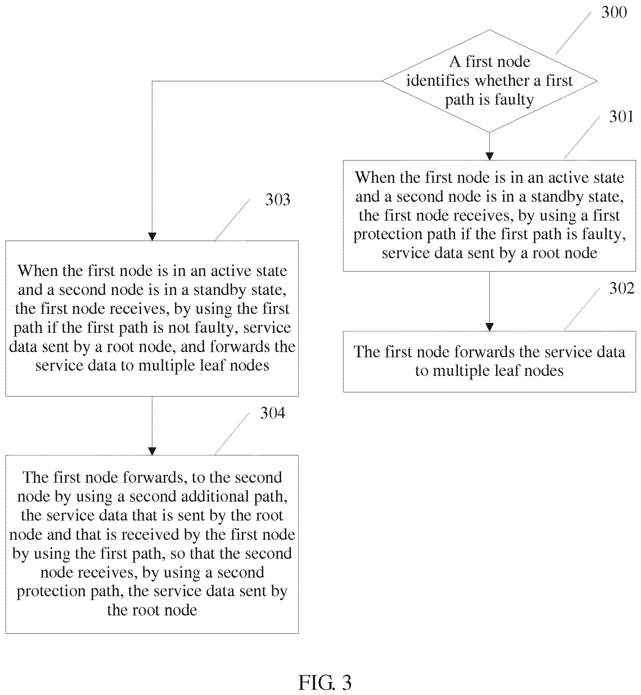

FIG. 3 is a schematic flowchart of another point-to-multipoint service transmission method according to an embodiment of the present invention. As shown in FIG. 3, the method includes the following steps:
301: When the first node is in an active state and a second node is in a standby state, the first node receives, by using a first protection path if a first path is faulty, service data sent by a root node.
302: The first node forwards the service data to multiple leaf nodes.
303: When the first node is in the active state and the second node is in the standby state, the first node receives, by using a first path if the first path is not faulty, service data sent by the root node, and forwards the service data to the multiple leaf nodes.

By means of the foregoing steps, when the first path is faulty, the first node can receive, by using the first protection path, service data that is sent to the second node by the root node by using a second path; when the first path is not faulty, the first node can receive, by using the first path, service data sent by the root node. In this way, regardless of whether the first path is faulty, the first node can receive service data sent by the root node and forward the service data to the multiple leaf nodes.

Optionally, the method may further include the following step:
300: The first node identifies whether the first path is faulty.

When the first path is faulty, step 301 can be performed. If the first path is not faulty, step 303 can be performed.

In addition, the first node may identify, in the following manners, whether the first path is faulty. Whether the first node can receive, by using the first path, service data sent by the root node is determined; if yes, it is determined that the first path is not faulty; if no, it is determined that the first path is faulty. Alternatively, the first node determines, by using an OMA message sent by an operation, administration and maintenance (English: Operation Administration and Maintenance, OAM for short) entity, whether the first path is faulty.

Optionally, the method may further include the following step:
304: The first node forwards, to the second node by using a second additional path, the service data that is sent by the root node and that is received by the first node by using the first path, so that the second node receives, by using a second protection path, the service data sent by the root node.

The received data in this step may be the service data received in step 303.

By means of the foregoing steps, the service data received by the first node by using the first path can be sent to the second node. In this way, when a path from the first node to the multiple leaf nodes is faulty, the second node can send, to the multiple leaf nodes, the service data forwarded by the first node, thereby improving a service data protection capability.

Optionally, the method may further include:
when the first node is in a standby state and the second node is in an active state, receiving, by the first node by using the first path if the first path is not faulty, service data sent by the root node, and forwarding the service data to the second node by using the second additional path, so that the second node receives, by using the second protection path, the service data sent by the root node.

By means of the foregoing steps, when the first node is in the standby state, the first node can send, to the second node by using the second additional path, the service data that is sent by the root node and that is received by using the first path. That is, the second node can receive, by using the second protection path, the service data sent by the root node. In this way, when the second path is faulty, the second node can receive the service data sent by the root node, thereby improving a service data protection capability. For example, a path from the first node to the multiple leaf nodes is faulty, no path from the second node to the multiple leaf nodes is faulty, and the second path from the root node to the second node is faulty. In this case, the first node can receive, by using the first path, service data sent by the root node, and the first node sends the service data to the second node by using the second additional path, so that the second node can send the service data to the multiple leaf nodes.

In this embodiment, multiple optional implementation manners are provided based on the embodiment shown in FIG. 2, and all of the multiple optional implementation manners can improve a protection capability of service transmission in a P2MP service.

The following are apparatus embodiments of the present invention. The apparatus embodiments of the present invention are used to execute the methods implemented in the first and the second method embodiments of the present invention. To facilitate description, only parts related to the embodiments of the present invention are shown. For specific technical details that are not disclosed, refer to the first and the second embodiments of the present invention.

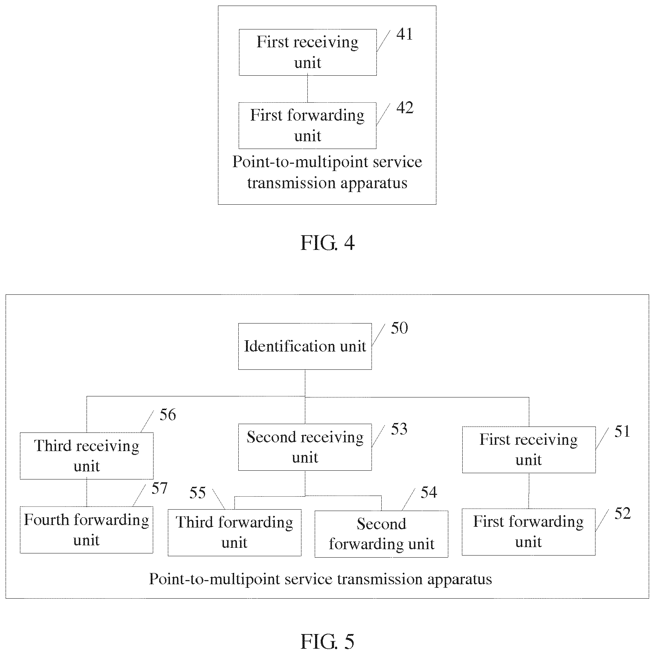

FIG. 4 is a schematic structural diagram of a point-to-multipoint service transmission apparatus according to an embodiment of the present invention. The apparatus is configured to execute the point-to-multipoint service transmission method provided in the embodiments of the present invention. The apparatus is deployed on a first node, and the first node is applied to the network architecture shown in FIG. 1. The apparatus is connected to a second node by using a first additional path, the first additional path and a second path constitute a first protection path that connects the first node to a root node, and the first protection path is used to transmit service data that is sent to the first node by the root node by using the second node. The second node is connected to the apparatus by using a second additional path, the second additional path and a first path constitute a second protection path that connects the second node to the root node, and the second protection path is used to transmit service data that is sent to the second node by the root node by using the first node. As shown in FIG. 4, the apparatus includes a first receiving unit 41 and a first forwarding unit 42.

The first receiving unit 41 is configured to: when the first node is in an active state and the second node is in a standby state, receive, by using the first protection path if the first path is faulty, service data sent by the root node.

The first forwarding unit 42 is configured to forward the service data to multiple leaf nodes.

In this embodiment, the first node is connected to the second node by using the first additional path, the first additional path and the second path constitute the first protection path that connects the first node to a root node, and the first protection path is used to transmit service data that is sent to the first node by the root node by using the second node; the second node is connected to the first node by using the second additional path, the second additional path and the first path constitute the second protection path that connects the second node to the root node, and the second protection path is used to transmit service data that is sent to the second node by the root node by using the first node. When the first node is in an active state and the second node is in a standby state, the first node receives, by using the first protection path if the first path is faulty, service data sent by the root node; and the first node forwards the service data to the multiple leaf nodes. In this way, when the first path is faulty, the first node can receive, by using the first protection path, the service data sent by the root node. Therefore, this embodiment can improve a protection capability of service transmission in a P2MP service.

FIG. 5 is a schematic structural diagram of a point-to-multipoint service transmission apparatus according to an embodiment of the present invention. The apparatus is configured to execute the point-to-multipoint service transmission method provided in the embodiments of the present invention. The apparatus is deployed on a first node, and the first node is applied to the network architecture shown in FIG. 1. The apparatus is connected to a second node by using a first additional path, the first additional path and a second path constitute a first protection path that connects the first node to a root node, and the first protection path is used to transmit service data that is sent to the first node by the root node by using the second node. The second node is connected to the apparatus by using a second additional path, the second additional path and a first path constitute a second protection path that connects the second node to the root node, and the second protection path is used to transmit service data that is sent to the second node by the root node by using the first node. As shown in FIG. 5, the apparatus includes a first receiving unit 51, a first forwarding unit 52, a second receiving unit 53, and a second forwarding unit 54.

The first receiving unit 51 is configured to: when the first node is in an active state and the second node is in a standby state, receive, by using the first protection path if the first path is faulty, service data sent by the root node.

The first forwarding unit 52 is configured to forward the service data to multiple leaf nodes.

The second receiving unit 53 is configured to: when the first node is in the active state and the second node is in the standby state, receive, by using the first path if the first path is not faulty, service data sent by the root node.

The second forwarding unit 54 is configured to forward the service data received by the second receiving unit to the multiple leaf nodes.

Optionally, the apparatus may further include:
an identification unit 50, configured to identify whether the first path is faulty.

Optionally, the apparatus may further include:
a third forwarding unit 55, configured to forward, to the second node by using the second additional path, the service data received by the second receiving unit 53, so that the second node receives, by using the second protection path, the service data sent by the root node.

Optionally, the apparatus may further include:
a third receiving unit 56, configured to: when the first node is in a standby state and the second node is in an active state, receive, by using the first path if the first path is not faulty, service data sent by the root node; and
a fourth forwarding unit 57, configured to forward, to the second node by using the second additional path, the service data received by the third receiving unit 56, so that the second node receives, by using the second protection path, the service data sent by the root node.

In addition, in this implementation manner, the identification unit 50 may further identify a status of the first node. If it is identified that the first node is currently in a standby state, the third receiving unit 56 can receive, by using the first path when the first path is not faulty, the service data sent by the root node.

In this embodiment, multiple optional implementation manners are provided based on the embodiment shown in FIG. 4, and all of the multiple optional implementation manners can improve a protection capability of service transmission in a P2MP service.

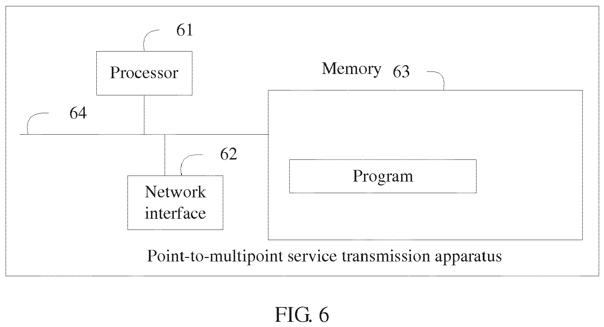

FIG. 6 is a schematic structural diagram of another point-to-multipoint service transmission apparatus according to an embodiment of the present invention. A first node is applied to the network architecture shown in FIG. 1, and the apparatus is deployed on the first node. The apparatus is connected to a second node by using a first additional path, the first additional path and a second path constitute a first protection path that connects the first node to a root node, and the first protection path is used to transmit service data that is sent to the first node by the root node by using the second node. The second node is connected to the apparatus by using a second additional path, the second additional path and a first path constitute a second protection path that connects the second node to the root node, and the second protection path is used to transmit service data that is sent to the second node by the root node by using the first node. As shown in FIG. 6, the apparatus includes a processor 61, a network interface 62, a memory 63, and a communications bus 64. The processor 61, the network interface 62, and the memory 63 are connected to each other by using the communications bus 64.

The memory 63 is configured to store a program. Specifically, the program may include program code, and the program code includes a computer operation instruction. The memory 63 may include a random access memory (random access memory, RAM for short), and may also include a non-volatile memory (non-volatile memory), for example, at least one magnetic disk memory.

The processor 61 is configured to execute the program stored in the memory 63 to implement the point-to-multipoint service transmission method provided in the embodiments of the present invention the method includes:
when the first node is in an active state and the second node is in a standby state, receiving, by using the first protection path if the first path is faulty, service data sent by the root node; and
forwarding the service data to multiple leaf nodes.

Optionally, when the first node is in the active state and the second node is in the standby state, the program executed by the processor 61 may further include:
receiving, by using the first path if the first path is not faulty, service data sent by the root node, and forwarding the service data to multiple leaf nodes.

Optionally, the method may further include:
forwarding, to the second node by using the second additional path, the service data that is sent by the root node and that is received by the first node by using the first path, so that the second node receives, by using the second protection path, the service data sent by the root node.

Optionally, the method may further include:
when the first node is in a standby state and the second node is in an active state, receiving, by the first node by using the first path if the first path is not faulty, service data sent by the root node, and forwarding the service data to the second node by using the second additional path, so that the second node receives, by using the second protection path, the service data sent by the root node.

In this embodiment, the first node is connected to the second node by using the first additional path, the first additional path and the second path constitute the first protection path that connects the first node to a root node, and the first protection path is used to transmit service data that is sent to the first node by the root node by using the second node; the second node is connected to the first node by using the second additional path, the second additional path and a first path constitute the second protection path that connects the second node to the root node, and the second protection path is used to transmit service data that is sent to the second node by the root node by using the first node. When the first node is in an active state and the second node is in a standby state, the first node receives, by using the first protection path if the first path is faulty, service data sent by the root node; and the first node forwards the service data to multiple leaf nodes. In this way, when the first path is faulty, the first node can receive, by using the first protection path, the service data sent by the root node. Therefore, this embodiment can improve a protection capability of service transmission in a P2MP service.

The processor 61 may be a general processor, including a central processing unit (Central Processing Unit, CPU for short), a network processor (Network Processor, NP for short), and the like; or may be a digital signal processor (DSP), an application-specific integrated circuit (ASIC), a field programmable gate array (FPGA), or another programmable logical device, discrete gate or transistor logical device, or discrete hardware component.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a RAM.

The foregoing descriptions are merely examples of embodiments of the present invention, and certainly are not intended to limit the protection scope of the present invention. Therefore, equivalent variations made in accordance with the claims of the present invention shall fall within the scope of the present invention.

## Claims

1. A point-to-multipoint service transmission method, applied to a network that comprises a root node, a first node, a second node, and multiple leaf nodes, wherein the first node is connected to the root node by using a first path, the second node is connected to the root node by using a second path, the multiple leaf nodes are dual-homed to the first node and the second node, and the first node and the second node are in an active-standby relationship;
the first node is connected to the second node by using a first additional path, the first additional path and the second path constitute a first protection path that connects the first node to the root node, and the first protection path is used to transmit service data that is sent to the first node by the root node by using the second node;
the second node is connected to the first node by using a second additional path, the second additional path and the first path constitute a second protection path that connects the second node to the root node, and the second protection path is used to transmit service data that is sent to the second node by the root node by using the first node; and
the method comprises:
when the first node is in an active state and the second node is in a standby state, receiving, by the first node by using the first protection path if the first path is faulty, service data sent by the root node; and
forwarding, by the first node, the service data to the multiple leaf nodes.

2. The method according to claim 1, wherein when the first node is in the active state and the second node is in the standby state, the method further comprises:
Receiving, by the first node by using the first path if the first path is not faulty, service data sent by the root node, and forwarding the service data to the multiple leaf nodes.

3. The method according to claim 2, wherein the method further comprises:
Forwarding, by the first node to the second node by using the second additional path, the service data that is sent by the root node and that is received by the first node by using the first path, so that the second node receives, by using the second protection path, the service data sent by the root node.

4. The method according to any one of claims 1 to 3, wherein the method further comprises:
when the first node is in a standby state and the second node is in an active state, receiving, by the first node by using the first path if the first path is not faulty, the service data sent by the root node, and forwarding the service data to the second node by using the second additional path, so that the second node receives, by using the second protection path, the service data sent by the root node.

5. A point-to-multipoint service transmission apparatus, applied to a network that comprises a root node, the first node, a second node, and multiple leaf nodes, wherein the apparatus is deployed on a first node, the first node is connected to the root node by using a first path, the second node is connected to the root node by using a second path, the multiple leaf nodes are dual-homed to the first node and the second node, and the first node and the second node are in an active-standby relationship;
the apparatus is connected to the second node by using a first additional path, the first additional path and the second path constitute a first protection path that connects the first node to the root node, and the first protection path is used to transmit service data that is sent to the first node by the root node by using the second node;
the second node is connected to the apparatus by using a second additional path, the second additional path and the first path constitute a second protection path that connects the second node to the root node, and the second protection path is used to transmit service data that is sent to the second node by the root node by using the first node; and
the apparatus comprises a first receiving unit and a first forwarding unit, wherein
the first receiving unit is configured to: when the first node is in an active state and the second node is in a standby state, receive, by using the first protection path if the first path is faulty, service data sent by the root node; and
the first forwarding unit is configured to forward the service data to the multiple leaf nodes.

6. The apparatus according to claim 5, wherein the apparatus further comprises:
a second receiving unit, configured to: when the first node is in the active state and the second node is in the standby state, receive, by using the first path if the first path is not faulty, service data sent by the root node; and
a second forwarding unit, configured to forward the service data received by the second receiving unit to the multiple leaf nodes.

7. The apparatus according to claim 6, wherein the apparatus further comprises:
a third forwarding unit, configured to forward, to the second node by using the second additional path, the service data received by the second receiving unit, so that the second node receives, by using the second protection path, the service data sent by the root node.

8. The apparatus according to any one of claims 5 to 7, wherein the apparatus further comprises:
a third receiving unit, configured to: when the first node is in a standby state and the second node is in an active state, receive, by using the first path if the first path is not faulty, service data sent by the root node; and
a fourth forwarding unit, configured to forward, to the second node by using the second additional path, the service data received by the third receiving unit, so that the second node receives, by using the second protection path, the service data sent by the root node.
